# EUROPEAN PATENT SPECIFICATION

(11) **EP 2 450 138 B1**
(45) Date of publication and mention of the grant of the patent: **16.10.2013**
(21) Application number: 10189749.4
(22) Date of filing: 03.11.2010
(51) Int. Cl.: B23C 5/20

(54) **Cutting insert with grooved surface defining plural support surfaces**
Schneideinsatz mit genuteter Oberfläche zur Definition mehrerer Auflageflächen
Insert de découpe avec surface rainurée définissant plusieurs surfaces de support

(43) Date of publication of application: 09.05.2012
(73) Proprietor: Seco Tools AB, SE-737 82 Fagersta (SE)
(72) Inventor: Michelet, Benjamin, 18000, Bourges (FR); Rivière, Bertrand, 18000, Bourges (FR)
(74) Representative: Hägglöf, Henrik

(56) References cited:
- EP-A1- 1 462 199
- US-A1- 2005 169 716
- US-A1- 2009 047 078

## Description

### BACKGROUND AND SUMMARY

The present invention relates generally to cutting inserts and, more particularly, to indexable cutting inserts with grooved surfaces defining plural support surfaces.

U.S. Patent Application Publication US2009/0047078 shows a cutting insert having a grooved surface defining plural support surfaces. The support surfaces are flat and meet at a sharp wedge base to form a wedge angle.

Document US 2005/169716 discloses a cutting insert according to the preamble of claim 1.

It is desirable to provide cutting inserts that facilitate efficient removal of chips cutting from a workpiece.

In accordance with the present invention, a cutting insert includes a first mounting surface, a second mounting surface on an opposite side of the insert from the first mounting surface, and a first side surface between the first mounting surface and the second mounting surface. The insert further includes a first groove extending substantially diagonally across the first side surface and dividing the first side surface into discrete, separated, triangular first and second first side support surfaces, the first and second first side support surfaces each being bounded along first and second edges thereof by rake surfaces forming non-zero angles with the first and second side support surfaces and along third edges thereof by the groove.

### BRIEF DESCRIPTION OF THE DRAWINGS

The features and advantages of the present invention are well understood by reading the following detailed description in conjunction with the drawings in which like numerals indicate similar elements and in which:

FIGS. 1A-1D are perspective, top, first side, and second side views of a cutting insert according to an aspect of the present invention;

FIG. 1E is a cross-sectional view taken at section 1E-1E of FIG. 1C;

FIG. 1F is a cross-sectional view taken at section 1F-1F of FIG. 1C;

FIG. 1G is a cross-sectional view taken at section 1G-1G of FIG. 1B;

FIG. 2 is a perspective view of a cutting tool according to an aspect of the present invention;

FIG. 3 is a perspective view of a portion of the cutting tool shown in FIG. 2;

FIGS. 4A-4C are top, first side, and second side views of a cutting insert according to another aspect of the present invention; and

FIGS. 5A and 5B are schematic views showing portions of a side face of an insert with a U-shaped groove and a V-shaped groove, respectively.

### DETAILED DESCRIPTION

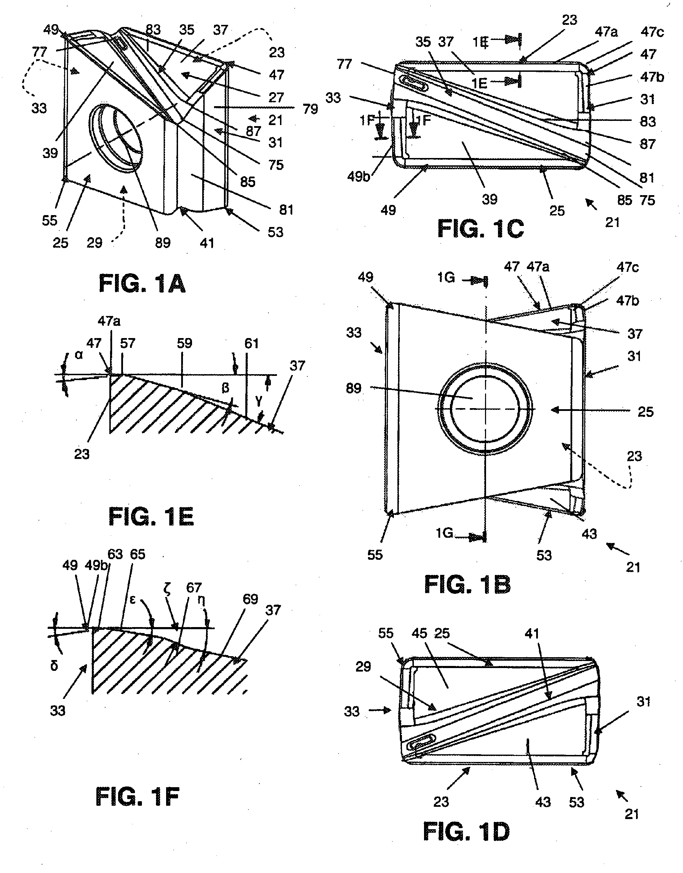

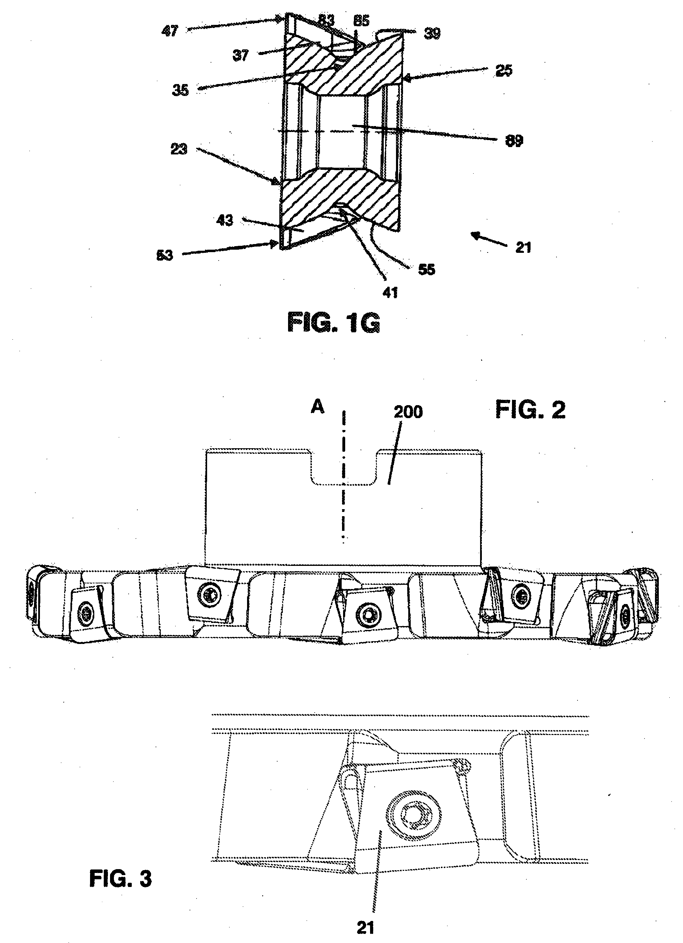

FIGS. 1A-1F show an indexable cutting insert 21 or portions thereof according to an aspect of the present invention that is considered to have particular application in connection with milling tools such as the disc milling tool 200 shown in FIGS. 2 and 3 including a toolholder on which the insert 21 is mounted, but may be adapted for use with turning and other tools, as well. The term "toolholder" is defined for purposes of the present invention as broadly including toolholders with integral cutting insert pockets and toolholders in the form of cassettes that are adapted to be attached to a tool body, i.e., the cassette is a form of toolholder.

FIG. 2 shows a disc milling tool 200 having inserts 21 that each have two "left-handed" cutting edges and two "right-handed" cutting edges. The inserts 21 are indexed so that, on a top side of the disc, what shall be referred to as their left-handed cutting edges are exposed to a workpiece (not shown) and so that, on a bottom side of the disc, what shall be referred to as their right-handed cutting edges are exposed to the workpiece.

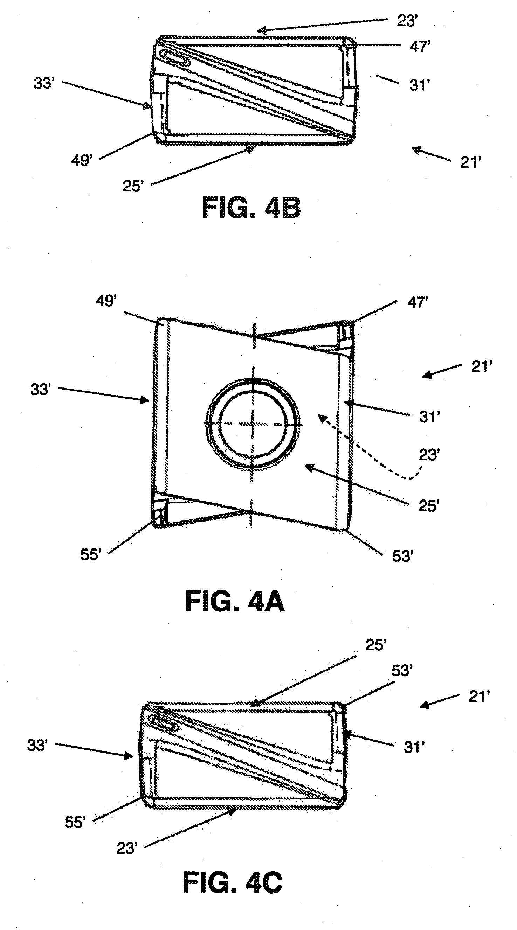

The inserts 21 are positioned on the tool so that, in the direction of rotation of the disc milling tool 200, they form a "positive" axial angle with an axis of rotation A of the disc milling tool, but they might instead be positioned so as to form a "negative" axial angle. Inserts used in a given tool may have cutting edges that all have the same "handedness", however, it will be appreciated that inserts with edges of different handedness, such as the insert 21, might be used in such a tool, instead. Likewise, inserts having all cutting edges of the same handedness might be positioned on a cutting tool so as to all form positive axial angles. An insert 21' having four cutting edges of the same handedness is shown in greater detail in FIGS. 4A-4C. The inserts 21 and 21' share many features and, accordingly, to simplify discussion, the insert 21 will be described, it being understood that the description generally applies as well to the insert 21', except where otherwise indicated.

The inserts 21 and 21' will ordinarily be made of a pressed and sintered cemented carbide, but may be made of other materials and by other processes, such as by grinding of a hard metal blank.

Referring to FIGS. 1A-1D, the insert 21 comprises a first mounting surface 23 and a second mounting surface 25 identical to the first mounting surface and on an opposite side of the insert from the first mounting surface. The insert 21 further comprises a first side surface 27 between the first mounting surface 23 and the second mounting surface 25 and a second side surface 29 between the first mounting surface and the second mounting surface and on an opposite side of the insert from the first side surface. The insert further comprises a first end surface 31 between the first mounting surface 23 and the second mounting surface 25 and between the first side surface 27 and the second side surface 29 and a second end surface 33 between the first mounting surface and the second mounting surface and between the first side surface and the second side surface and on an opposite side of the insert from the first end surface.

The insert 21 further comprises a first groove 35 extending substantially diagonally across the first side surface 27 and dividing the first side surface into discrete, separated first and second first side support surfaces 37 and 39, respectively. The insert 21 further comprises a second groove 41 extending substantially diagonally across the second side surface 29 and dividing the second side surface into discrete, separated first and second second side support surfaces 43 and 45, respectively.

In the insert 21 shown in FIGS. 1A-D the second side surface 29 (FIG. 1D) is a mirror image of the first side surface 27 (FIG. 1C). As seen, for example, with respect to FIGS. 1A and 1B, the first mounting surface 23 (hidden in FIGS. 1A and 1B) and the identical second mounting surface 25 each have a substantially truncated triangle shape. By contrast, in the insert 21' shown in FIGS. 4A-4C, the second side surface 29' is identical to the first side surface 27', and the first mounting surface 23' and the second mounting surface 25' each have a substantially rhomboidal shape (which may include a square or rectangular shape).

The insert 21 can comprise four cutting edges 47, 49, 53, 55 corresponding to each of the support surfaces 37, 39, 43, and 45, respectively. The cutting edges 47 and 49 shall be denominated "left-handed" cutting edges and the cutting edges 53 and 55 shall be denominated "right-handed" cutting edges. In the insert 21' shown in FIGS. 4A-4C, the cutting edges 47', 49', 53', and 55' are all what is here denominated as left-handed, however, it will be appreciated that they might, instead, be all right-handed cutting edges (the diagonal grooves would extend from different corners). In the insert 21, the first cutting edge 47 is formed at an intersection of the first first side support surface 37, the first mounting surface 23, and the first end surface 31. The second cutting edge 49 is formed at an intersection of the second first side support surface 39, the second mounting surface 25, and the second end surface 33. The third cutting edge 53 is formed at an intersection of the first second side support surface 43, the first mounting surface 23, and the second end surface 33. The fourth cutting edge 55 is formed at an intersection of the second second side support surface 45, the second mounting surface 25, and the first end surface 31.

Referring to the first cutting edge 47 for purposes of illustration, and as seen, for example, in FIG. 1C, each cutting edge can comprise a first component 47a that extends along an adjacent one of the first and second mounting surfaces 23 and 25 (in the case of edge 47, along the first mounting surface 23) and a second component 47b that extends along an adjacent one of the first and second end surfaces 31 and 33 (in the case of edge 47, along the first end surface 31). The first and second cutting edge components 47a and 47b can be substantially straight and meet at a point or at a radiused corner 47c, or they can be curved and merge into each other. When the insert 21 is mounted in a cutting tool 200 in the manner shown in FIG. 2, the first component 47a is ordinarily referred to as an axial component and the second component 47b is ordinarily referred to as a radial component.

As seen in FIGS. 1E and 1F, the support surfaces can have specially designed geometries to facilitate formation of chips and removal of chips from a workpiece. FIG. 1E shows the first cutting edge component 47a as having, on the adjacent first first side support surface 37, an axial land 57 immediately inward of the cutting edge component. The illustrated axial land 57 forms an obtuse angle with the adjacent first mounting surface 23 (acute angle α with the perpendicular to the first mounting surface) which can strengthen the cutting edge component 47a, however, other configurations can be provided, including a land area that forms an acute angle with the first mounting surface, or is perpendicular to the first mounting surface, or is omitted entirely.

Inward from the axial land 57, the first first side support surface 37 comprises a axial first rake surface portion 59 that forms an angle with axial the land area and, in the illustrated embodiment, forms an acute angle β with a line perpendicular to the first mounting surface 23 and an acute angle with the first mounting surface itself, which configuration can facilitate cutting of the workpiece, however, other configurations can be provided, including an axial first rake surface portion that forms an obtuse angle with the first mounting surface or is perpendicular to the first mounting surface. In the illustrated embodiment, inward from the axial first rake surface portion 59, an axial second rake surface portion 61 is provided that forms an acute angle γ with the perpendicular to the mounting surface 23 which, in the illustrated embodiment, is a larger acute angle than the angle β, and an acute angle with the first mounting surface itself. It will be appreciated that the axial land 57 and axial rake surface portions 59 and 61 can have configurations other than those illustrated.

FIG. 1F shows a second cutting edge component 49b (identical to the first cutting edge component 47b) as having, on the adjacent second first side support surface 39, a radial land 63 immediately inward of the cutting edge component. The illustrated radial land 63 forms an obtuse angle with the adjacent second end surface 33 (acute angle δ with perpendicular to second end surface) which can strengthen the cutting edge component 49b, however, other configurations can be provided, including a land area that forms an acute angle with the first mounting surface, or is perpendicular to the first mounting surface, or is omitted entirely.

Inward from the radial land 63, the second first side support surface 39 comprises a radial first rake surface portion 65 that forms an angle ε with a perpendicular to the first end surface 33 which, in the illustrated embodiment, is an acute angle and can facilitate cutting of the workpiece, and an acute angle with the first end surface itself, however, other configurations can be provided, including a radial first rake surface portion that forms an obtuse angle with the first end surface or is perpendicular to the first end surface. In the illustrated embodiment, inward from the radial first rake surface portion 65, a radial second rake surface portion 67 is provided that forms an angle with the radial first rake surface portion and forms, in the illustrated embodiment, a larger acute angle ζ with the perpendicular to the first end surface 33 than the radial first rake surface portion (and a smaller acute angle with the first end surface itself). In the illustrated embodiment, inward from the radial second rake surface portion 67, a radial third rake surface portion 69 is provided that forms an angle with the radial second rake surface portion and forms, in the illustrated embodiment, a smaller acute angle η with the perpendicular to the first end surface 33 than the radial second rake surface portion. The radial third rake surface portion 69 forms an acute angle with the first end surface 33. It will be appreciated that the radial land 63 and the radial rake surfaces 65, 67, and 69 can have configurations other than those illustrated.

Inward of any geometry provided by the cutting edges and the rake surface portions, if provided, the support surfaces will ordinarily be substantially flat until they intersect with the grooves in the first and second side surfaces. In a presently preferred embodiment of the insert, the grooves 35 and 41 divide the side surfaces 27 and 29 into discrete, separated, triangular first and second first side support surfaces 37 and 39, and 43 and 45. With respect, for example, to the first side surface, the first and second first side support surfaces 37 and 39 are each bounded along first and second edges thereof by rake surfaces 59 and 65 forming non-zero angles with the first and second side support surfaces and along third edges thereof by the groove (35). A plane of, for example, the first first side support surface 37 forms an angle of between 60 and 85 degrees, more preferably about 79 degrees, with a plane of the first end surface 31 and an angle of between 45 and 85 degrees, more preferably 77 degrees, with a plane of the first mounting surface 23.

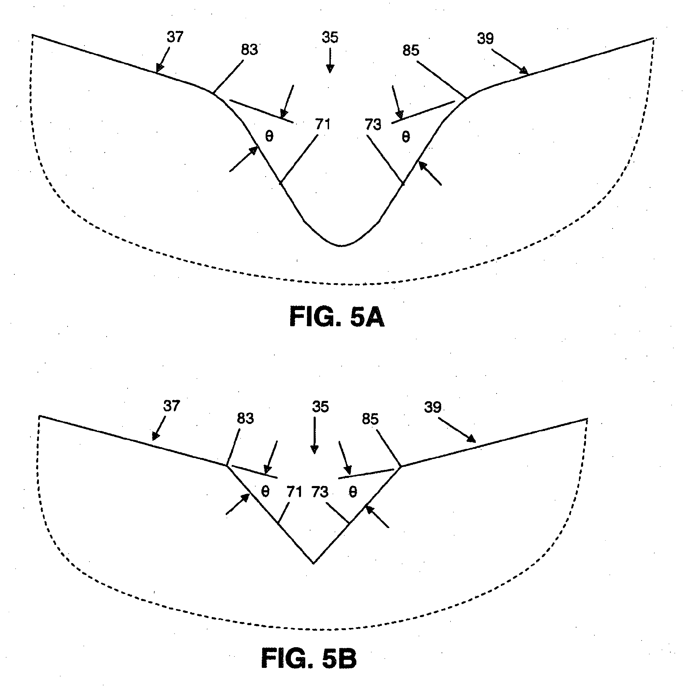

As seen, for example, with respect to FIG. 1G, the first and second grooves 35 and 41 are ordinarily one of substantially U-shaped and substantially V-shaped. Discussing for purposes of illustration, the first groove 35 (it being appreciated that the second groove is identical or a mirror image of the first groove), as seen in FIG. 5A (U-shaped groove) and 5B (V-shaped groove), the first groove has first and second groove side surfaces 71 and 73 forming non-zero angles θ with adjacent portions of the first and second first side support surfaces 37 and 39, respectively. Forming the groove side surfaces 71 and 73 so that the grooves are depressed relative to the side support surfaces facilitates flow and removal of chips cut from a workpiece. In the illustrated examples, the first and second groove side surfaces 71 and 73 are substantially flat, however, they may be curved. The first and second groove side surfaces 71 and 73 may merge gradually into the first and second first side support surfaces 37 and 39 as shown in FIG. 5A, or they may intersect with the first and second first side support surfaces along a line or sharp curve as shown in FIG. 5B. The first and second groove side surfaces 71 and 73 may meet at a curved bottom as shown in FIGS. 1G and 5A, a flat bottom (not shown), or as shown in FIG. 5B, at a line or sharp curve.

Again discussing the first groove 35 for purposes of illustration, as seen in FIG 1A an 1C, opposite ends 75 and 77 of each groove intersect with the first end surface 31 and the second end surface 33, respectively. The ends 75 and 77 of the grooves can flare outwardly to larger widths which can, among other things, facilitate removal of chips cut from a workpiece.

The first end surface 31 and the second end surface 33 ordinarily each comprise at least one clearance surface portion adjacent a corresponding cutting edge and at least one insert supporting surface portion remote from the corresponding cutting edge. As seen, for example, in FIG. 1A, discussing the first end surface 31 and the first cutting edge 47 for purposes of illustration, the first end surface comprises a clearance surface 79 adjacent the first cutting edge, which is referred to here as its corresponding cutting edge. When the milling tool 200 shown in FIG. 2 turns about its axis of rotation in a cutting direction, the clearance surface follows the cutting edge. As seen in FIG. 1A, the first end surface 31 further comprises a supporting surface portion 81 that abuts an abutment surface (not shown) in a recess on the milling tool when the second cutting edge 49 is in use. The supporting surface portion 81 can also be remote from what shall be referred to here as its corresponding cutting edge 47. In this way, the supporting surface portion on any end surface that is functioning to support the insert is remote from the nearest (non-working) cutting edge, which reduces the risk of damage to that cutting edge.

Each of the first groove 35 and the second groove 41 has two longitudinal edges that intersect each of the first end surface and the second end surface. Again, discussing the first groove 35 for purposes of illustration, as seen in FIG. 1A, the first groove includes two longitudinal edges 83 and 85 that intersect, for example, the first end surface 31. The at least one insert supporting surface portion 81 on the first end surface 31 is disposed even with or below a point 87 at which one of the longitudinal edges 83 of the groove 35 closest to the cutting edge 47 corresponding to that at least one insert supporting surface 81 intersects the first end surface.

A through hole 89 ordinarily extends between the first mounting surface 23 and the second mounting surface 25. As seen in FIGS. 2 and 3, a clamping screw 91 extends through the through hole and threads on the clamping screw mate with threads (not shown) on the milling tool toolholder body. An enlarged head of the screw 91 abuts a clamping surface in the through hole to clamp the insert relative to the toolholder body.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such.

## Claims

1. A cutting insert (21, 21'), comprising:
a first mounting surface (23, 23');
a second mounting surface (25, 25') on an opposite side of the insert (21, 21') from the first mounting surface (23, 23');
a first side surface (27, 27') between the first mounting surface (23, 23') and the second mounting surface (25, 25');
**characterized in that** the insert (21, 21') comprises:
a first groove (35) extending substantially diagonally across the first side surface (27, 27') and dividing the first side surface (27, 27') into discrete, separated, triangular first and second first side support surfaces (37 and 39), the first and second first side support surfaces (37 and 39) each being bounded along first and second edges thereof by rake surfaces (59, 65) forming non-zero angles with the first and second side support surfaces and along third edges thereof by the groove (35).

2. The cutting insert (21, 21') as set forth in claim 1, comprising a first end surface (31, 31') between the first mounting surface (23, 23') and the second mounting surface (25, 25') and adjacent the first side surface (27, 27'), a plane of the first first side support surface (37) forming an angle of between 60 and 85 degrees with a plane of the first end surface (31, 31') and an angle of between 45 and 85 degrees with a plane of the first mounting surface (23, 23').

3. The cutting insert (21') as set forth in any of claims 1 and 2, **characterized in that** the first mounting surface (23') and the second mounting surface (25') each have a substantially rhomboidal shape.

4. The cutting insert (21') as set forth in any of claims 1-3, comprising a second side surface (29') between the first mounting surface (23') and the second mounting surface (25'), **characterized in that** the second side surface (29') is identical to the first side surface (27').

5. The cutting insert (21) as set forth in any of claims 1 and 2, comprising a second side surface (29) between the first mounting surface (23) and the second mounting surface (25), **characterized in that** the second side surface (29) is a mirror image of the first side surface (27).

6. The cutting insert (21) as set forth in any of claims 1, 2, and 5, **characterized in that** the first mounting surface (23) and the second mounting surface (25) each have a substantially truncated triangle shape.

7. The cutting insert (21, 21') as set forth in any of claims 1-6, **characterized in that** the insert (21, 21') comprises four cutting edges (47, 49, 53, 55; 47', 49', 53', 55'), each cutting edge corresponding to a support surface (37, 39, 43, 55).

8. The cutting insert (21, 21') as set forth in claim 7, comprising:
a second side surface (29, 29') between the first mounting surface (23, 23') and the second mounting surface (25, 25') and on an opposite side of the insert (21, 21') from the first side surface (27, 27');
a first end surface (31, 31') between the first mounting surface (23, 23') and the second mounting surface (25, 25') and between the first side surface (27, 27') and the second side surface (29, 29');
a second end surface (33, 33') between the first mounting surface (23, 23') and the second mounting surface (25, 25') and between the first side surface (27, 27') and the second side surface (29, 29') and on an opposite side of the insert (21, 21') from the first end surface (31, 31');
**characterized in that** a first component (47a) of each cutting edge extends (47) along one of the first and second mounting surfaces (25, 25') and a second component (47b) of each cutting edge extends along one of the first and second end surfaces (31, 33; 31', 33').

9. The cutting insert (21, 21') as set forth in any of claims 1-8, **characterized in that** the insert (21, 21') comprises
a first cutting edge (47, 47') formed at an intersection of the first first side support surface (37), the first mounting surface (23, 23'), and the first end surface (31, 31'),
a second cutting edge (49, 49') formed at an intersection of the second first side support surface (39), the second mounting surface (25, 25'), and the second end surface (33, 33'),
a third cutting edge (53, 53') formed at an intersection of the first second side support surface (43), the first mounting surface (23, 23'), and the second end surface (33, 33'), and
a fourth cutting edge (55, 55') formed at an intersection of the second second side support surface (45), the second mounting surface (25, 25'), and the first end surface (31, 31').

10. The cutting insert (21, 21') as set forth in any of claims 1-9, **characterized in that** the first groove (35) is one of substantially U-shaped and substantially V-shaped.

11. The cutting insert (21, 21') as set forth in any of claims 1-10, **characterized in that** the first groove (35) has first and second side surfaces (71 and 73) forming non-zero angles (θ) with the first and second first side support surfaces (37 and 39).

12. The cutting insert (21, 21') as set forth in claim 11, wherein the first and second side surfaces (71 and 73) are substantially flat.

13. The cutting insert (21, 21') as set forth in any of claims 1-12, **characterized in that** the first and second first side support surfaces (37 and 39) are substantially flat.

14. The cutting insert (21, 21') as set forth in any of claims 1-14, comprising:
a second side surface (29, 29') between the first mounting surface (23, 23') and the second mounting surface (25, 25') and on an opposite side of the insert (21, 21') from the first side surface (27, 27');
a first end surface (31,31') between the first mounting surface (23, 23') and the second mounting surface (25, 25') and between the first side surface (27, 27') and the second side surface (29, 29');
a second end surface (33, 33') between the first mounting surface (23, 23') and the second mounting surface (25, 25') and between the first side surface (27, 27') and the second side surface (29, 29') and on an opposite side of the insert (21, 21') from the first end surface (31,31');
**characterized in that** the first end surface (31) and the second end surface (33) each comprises at least one clearance surface portion (79) adjacent a corresponding cutting edge (47) and at least one insert supporting surface portion (81) remote from the corresponding cutting edge (47).

15. The cutting insert (21, 21') as set forth in claim 14, **characterized in that** the first groove (35) has two longitudinal edges (83, 85) that intersect each of the first end surface (31) and the second end surface (33), and that the at least one insert supporting surface portion (81) on each of the first end surface (31) and the second end surface (33) is disposed even with or below a point (87) at which one of the longitudinal edges (83) of a groove (35) closest to the cutting edge (47) corresponding to that at least one insert supporting surface (81) intersects the one of the first end surface (31) and the second end surface (33).

## Patentansprüche

1. Schneideinsatz (21, 21'), welcher umfasst:
eine erste Befestigungsfläche (23, 23'),
eine zweite Befestigungsfläche (25, 25') auf einer von der ersten Befestigungsfläche (23, 23') aus gegenüberliegenden Seite des Einsatzes (21, 21'),
eine erste Seitenfläche (27, 27') zwischen der ersten Befestigungsfläche (23, 23') und der zweiten Befestigungsfläche (25, 25'),
**dadurch gekennzeichnet, dass** der Einsatz (21, 21') umfasst:
eine erste Nut (35), die sich im Wesentlichen diagonal über die erste Seitenfläche (27, 27') erstreckt und die erste Seitenfläche (27, 27') in diskrete, getrennte, dreieckige erste und zweite erste seitliche Stützflächen (37 und 39) teilt, wobei die ersten und zweiten ersten seitlichen Stützflächen (37 und 39) jeweils entlang erster und zweiter Kanten derselben von Neigungsflächen (59, 65) begrenzt werden, die von Null verschiedene Winkel mit den ersten und zweiten seitlichen Stützflächen und entlang dritter Kanten derselben durch die Nut (35) bilden.

2. Schneideinsatz (21, 21') nach Anspruch 1, umfassend eine erste Endfläche (31, 31') zwischen der ersten Befestigungsfläche (23, 23') und der zweiten Befestigungsfläche (25, 25') und angrenzend an die erste Seitenfläche (27, 27'), wobei ein ebener Abschnitt der ersten ersten seitlichen Stützfläche (37) einen Winkel zwischen 60 und 85 Grad mit einem ebenen Abschnitt der ersten Endfläche (31, 31') bildet und einen Winkel zwischen 45 und 85 Grad mit einem ebenen Abschnitt der ersten Befestigungsfläche (23, 23').

3. Schneideinsatz (21') nach einem der Ansprüche 1 und 2, **dadurch gekennzeichnet, dass** die erste Befestigungsfläche (23') und die zweite Befestigungsfläche (25') jeweils eine im Wesentlichen rhomboide Form haben.

4. Schneideinsatz (21') nach einem der Ansprüche 1 bis 3, umfassend eine zweite Seitenfläche (29') zwischen der ersten Befestigungsfläche (23') und der zweiten Befestigungsfläche (25'), **dadurch gekennzeichnet, dass** die zweite Seitenfläche (29') identisch zu der ersten Seitenfläche (27') ist.

5. Schneideinsatz (21) nach einem der Ansprüche 1 und 2, umfassend eine zweite Seitenfläche (29) zwischen der ersten Befestigungsfläche (23) und der zweiten Befestigungsfläche (25), **dadurch gekennzeichnet, dass** die zweite Seitenfläche (29) ein Spiegelbild der ersten Seitenfläche (27) ist.

6. Schneideinsatz (21) nach einem der Ansprüche 1, 2 und 5, **dadurch gekennzeichnet, dass** die erste Befestigungsfläche (23) und die zweite Befestigungsfläche (25) jeweils im Wesentlichen die Form eines abgestumpften Dreiecks haben.

7. Schneideinsatz (21, 21') nach einem der Ansprüche 1 bis 6, **dadurch gekennzeichnet, dass** der Einsatz (21, 21') vier Schneidkanten (47, 49, 53, 55; 47', 49', 53', 55') umfasst, wobei jede Schneidkante zu einer Stützfläche (37, 39, 43, 45) zugehörig ist.

8. Schneideinsatz (21, 21') nach Anspruch 7, umfassend:
eine zweite Seitenfläche (29, 29') zwischen der ersten Befestigungsfläche (23, 23') und der zweiten Befestigungsfläche (25, 25') und auf einer von der ersten Seitenfläche (27, 27') aus gegenüberliegenden Seite des Einsatzes (21, 21'),
eine erste Endfläche (31, 31') zwischen der ersten Befestigungsfläche (23, 23') und der zweiten Befestigungsfläche (25, 25') und zwischen der ersten Seitenfläche (27, 27') und der zweiten Seitenfläche (29, 29'),
eine zweite Endfläche (33, 33') zwischen der ersten Befestigungsfläche (23, 23') und der zweiten Befestigungsfläche (25, 25') und zwischen der ersten Seitenfläche (27, 27') und der zweiten Seitenfläche (29, 29') und auf einer von der ersten Endfläche (31, 31') aus gegenüberliegenden Seite des Einsatzes (21, 21'),
**dadurch gekennzeichnet, dass** sich ein erster Teil (47a) von jeder Schneidkante (47) entlang einer der ersten und zweiten Befestigungsflächen (25, 25') erstreckt und sich ein zweiter Teil (47b) von jeder Schneidkante entlang einer der ersten und zweiten Endflächen (31, 33; 31', 33') erstreckt.

9. Schneideinsatz (21, 21') nach einem der Ansprüche 1 bis 8, **dadurch gekennzeichnet, dass** der Einsatz (21, 21') umfasst
eine erste Schneidkante (47, 47'), die an einer Schnittlinie der ersten ersten seitlichen Stützfläche (37), der ersten Befestigungsfläche (23, 23') und der ersten Endfläche (31, 31') gebildet ist,
eine zweite Schneidkante (49, 49'), die an einer Schnittlinie der zweiten ersten seitlichen Stützfläche (39), der zweiten Befestigungsfläche (25, 25') und der zweiten Endfläche (33, 33') gebildet ist,
eine dritte Schneidkante (53, 53'), die an einer Schnittlinie der ersten zweiten seitlichen Stützfläche (43), der ersten Befestigungsfläche (23, 23') und der zweiten Endfläche (33, 33') gebildet ist, und
eine vierte Schneidkante (55, 55'), die an einer Schnittlinie der zweiten zweiten seitlichen Stützfläche (45), der zweiten Befestigungsfläche (25, 25') und der ersten Endfläche (31, 31') gebildet ist.

10. Schneideinsatz (21, 21') nach einem der Ansprüche 1 bis 9, **dadurch gekennzeichnet, dass** die erste Nut (35) im Wesentlichen U-förmig oder im Wesentlichen V-förmig ist.

11. Schneideinsatz (21, 21') nach einem der Ansprüche 1 bis 10, **dadurch gekennzeichnet, dass** die erste Nut (35) erste und zweite Seitenflächen (71 und 73) hat, die von Null verschiedene Winkel (θ) mit den ersten und zweiten ersten seitlichen Stützflächen (37 und 39) bilden.

12. Schneideinsatz (21, 21') nach Anspruch 11, wobei die ersten und zweiten Seitenflächen (71 und 73) im Wesentlichen flach sind.

13. Schneideinsatz (21, 21') nach einem der Ansprüche 1 bis 12, **dadurch gekennzeichnet, dass** die ersten und zweiten ersten seitlichen Stützflächen (37 und 39) im Wesentlichen flach sind.

14. Schneideinsatz (21, 21') nach einem der Ansprüche 1 bis 13, welcher umfasst:
eine zweite Seitenfläche (29, 29') zwischen der ersten Befestigungsfläche (23, 23') und der zweiten Befestigungsfläche (25, 25') und auf einer von der ersten Seitenfläche (27, 27') aus gegenüberliegenden Seite des Einsatzes (21, 21'),
eine erste Endfläche (31, 31') zwischen der ersten Befestigungsfläche (23, 23') und der zweiten Befestigungsfläche (25, 25') und zwischen der ersten Seitenfläche (27, 27') und der zweiten Seitenfläche (29, 29'),
eine zweite Endfläche (33, 33') zwischen der ersten Befestigungsfläche (23, 23') und der zweiten Befestigungsfläche (25, 25') und zwischen der ersten Seitenfläche (27, 27') und der zweiten Seitenfläche (29, 29') und auf einer von der ersten Endfläche (31, 31') aus gegenüberliegenden Seite des Einsatzes (21, 21'),
**dadurch gekennzeichnet, dass** die erste Endfläche (31) und die zweite Endfläche (33) jeweils zumindest einen Freiflächenabschnitt (79) angrenzend an eine zugehörige SchneidSchneidkante (47) umfassen und entfernt von der zugehörigen Schneidkante (47) zumindest einen einsatzstützenden Flächenabschnitt (81).

15. Schneideinsatz (21, 21') nach Anspruch 14, **dadurch gekennzeichnet, dass** die erste Nut (35) zwei Längskanten (83, 85) hat, die sowohl die erste Endfläche (31) als auch die zweite Endfläche (33) schneiden, und dass der zumindest eine einsatzstützende Flächenabschnitt (81) sowohl auf der ersten Endfläche (31) als auch auf der zweiten Endfläche (33) auf gleicher Höhe oder unterhalb eines Punktes (87) angeordnet ist, an dem eine der Längskanten (83) einer Nut (35), die der der zumindest einen einsatzstützenden Fläche (81) zugehörigen Schneidkante (47) am nächsten ist, die erste Endfläche (31) oder die zweite Endfläche (33) schneidet.

## Revendications

1. Plaquette de découpe (21, 21'), comprenant:
une première surface de montage (23, 23') ;
une deuxième surface de montage (25, 25') sur un côté opposé de la plaquette de découpe (21, 21') depuis la première surface de montage (23, 23') ;
une première surface latérale (27, 27') entre la première surface de montage (23, 23') et la deuxième surface de montage (25, 25') ;
**caractérisée en ce que** la plaquette de découpe (21, 21') comprend :
une première rainure (35) s'étendant sensiblement en diagonale en travers de la première surface latérale (27, 27') et divisant la première surface latérale (27, 27') en des première et deuxième surfaces de support latérales (37 et 39) distinctes, séparées et triangulaires, les première et deuxième surfaces de support latérales (37 et 39) étant chacune reliées le long des premiers et deuxièmes bords de celles-ci par des surfaces inclinées (59, 65) formant des angles non nuls avec les première et deuxième surfaces de support latérales et le long de troisièmes bords de celles-ci par les rainures (35).

2. Plaquette de découpe (21, 21') selon la revendication 1, comprenant une première surface d'extrémité (31, 31') entre la première surface de montage (23, 23') et la deuxième surface de montage (25, 25') et de manière adjacente à la première surface latérale (27, 27'), un plan de la première surface de support latérale principale (37) formant un angle compris entre 60 et 85 degrés avec un plan de la première surface d'extrémité (31, 31') et un angle compris entre 45 et 85 degrés avec un plan de la première surface de montage (23, 23').

3. Plaquette de découpe (21') selon l'une quelconque des revendications 1 et 2, **caractérisée en ce que** la première surface de montage (23') et la deuxième surface de montage (25') présentent chacune une forme sensiblement rhomboïdale.

4. Plaquette de découpe (21') selon l'une quelconque des revendications 1 à 3, comprenant une deuxième surface latérale (29') entre la première surface de montage (23') et la deuxième surface de montage (25'), **caractérisée en ce que** la deuxième surface latérale (29') est identique à la première surface latérale (27).

5. Plaquette de découpe (21) selon l'une quelconque des revendications 1 et 2, comprenant une deuxième surface latérale (29) entre la première surface de montage (23) et la deuxième surface de montage (25), **caractérisée en ce que** la deuxième surface latérale (29) est une image en miroir de la première surface latérale (27).

6. Plaquette de découpe (21) selon l'une quelconque des revendications 1, 2, et 5, **caractérisée en ce que** la première surface de montage (23) et la deuxième surface de montage (25) présentent chacune sensiblement une forme de triangle tronqué.

7. Plaquette de découpe (21, 21') selon l'une quelconque des revendications 1 à 6, **caractérisée en ce que** la plaquette tranchante (21, 21') comprend quatre arêtes tranchantes (47, 49, 53, 55 ; 47', 49', 53', 55'), chaque arête de découpe correspondant à une surface de support (37, 39, 43, 55).

8. Plaquette de découpe (21, 21') selon la revendication 7, comprenant :
une deuxième surface latérale (29, 29') entre la première surface de montage (23, 23') et la deuxième surface de montage (25, 25') et sur un côté opposé de la plaquette de découpe (21, 21') depuis la première surface latérale (27, 27') ;
une première surface d'extrémité (31, 31') entre la première surface de montage (23, 23') et la deuxième surface de montage (25, 25') et entre la première surface latérale (27, 27') et la deuxième surface latérale (29, 29') ;
une deuxième surface d'extrémité (33, 33') entre la première surface de montage (23, 23') et la deuxième surface de montage (25, 25') et entre la première surface latérale (27, 27') et la deuxième surface latérale (29, 29') et sur un côté opposé de la plaquette de découpe (21, 21') depuis la première surface d'extrémité (31, 31') ;
**caractérisée en ce qu'**un premier composant (47a) de chaque arête tranchante (47) s'étend le long d'une surface parmi les première et deuxième surfaces de montage (25, 25') et un deuxième composant (47b) de chaque arête tranchante s'étend le long d'une surface parmi les première et deuxième surfaces d'extrémité (31, 33 ; 31', 33').

9. Plaquette de découpe (21, 21') selon l'une quelconque des revendications 1 à 8, **caractérisée en ce que** la plaquette de découpe (21, 21') comprend
une première arête tranchante (47, 47') formée au niveau d'une intersection de la première surface de support latérale principale (37), la première surface de montage (23, 23'), et la première surface d'extrémité (31, 31'),
une deuxième arête tranchante (49, 49') formée au niveau d'une intersection de la première surface de support latérale secondaire (39), la deuxième surface de montage (25, 25'), et la deuxième surface d'extrémité (33, 33'),
une troisième arête tranchante (53, 53') formée au niveau d'une intersection de la deuxième surface de support latérale principale (43), la première surface de montage (23, 23'), et la deuxième surface d'extrémité (33, 33'), et
une quatrième arête tranchante (55, 55') formée au niveau d'une intersection de la deuxième surface de support latérale secondaire (45), la deuxième surface de montage (25, 25'), et la première surface d'extrémité (31, 31').

10. Plaquette de découpe (21, 21') selon l'une quelconque des revendications 1 à 9, **caractérisée en ce que** la première rainure (35) est soit sensiblement en forme de U, soit sensiblement en forme de V.

11. Plaquette de découpe (21, 21') selon l'une quelconque des revendications 1 à 10, **caractérisée en ce que** la première rainure (35) présente des première et deuxième surfaces latérales (71 et 73) formant des angles non nuls (θ) avec les première et deuxième surfaces de support latérales principales (37 et 39).

12. Plaquette de découpe (21, 21') selon la revendication 11, dans laquelle les première et deuxième surfaces latérales (71 et 73) sont sensiblement planes.

13. Plaquette de découpe (21, 21') selon l'une quelconque des revendications 1 à 12, **caractérisée en ce que** les première et deuxième surfaces de support latérales principales (37 et 39) sont sensiblement planes.

14. Plaquette de découpe (21, 21') selon l'une quelconque des revendications 1 à 13, comprenant :
une deuxième surface latérale (29, 29') entre la première surface de montage (23, 23') et la deuxième surface de montage (25, 25') et sur un côté opposé de la plaquette de découpe (21, 21') depuis la première surface latérale (27, 27') ;
une première surface d'extrémité (31, 31') entre la première surface de montage (23, 23') et la deuxième surface de montage (25, 25') et entre la première surface latérale (27, 27') et la deuxième surface latérale (29, 29') ;
une deuxième surface d'extrémité (33, 33') entre la première surface de montage (23, 23') et la deuxième surface de montage (25, 25') et entre la première surface latérale (27, 27') et la deuxième surface latérale (29, 29') et sur un côté opposé de la plaquette de découpe (21, 21') depuis la première surface d'extrémité (31, 31') ;
**caractérisée en ce que** la première surface d'extrémité (31) et la deuxième surface d'extrémité (33) comprennent chacune au moins une partie de surface en dégagement (79) adjacente à une arête tranchante correspondante (47) et au moins une partie de surface de support de plaquette de découpe (81) distante de l'arête tranchante correspondante (47).

15. Plaquette de découpe (21, 21') selon la revendication 14, **caractérisée en ce que** la première rainure (35) présente deux bords longitudinaux (83, 85) qui coupent chacun la première surface d'extrémité (31) et la deuxième surface d'extrémité (33), et **en ce que** la au moins une partie de surface de support de plaquette de découpe (81) sur chaque surface parmi la première surface d'extrémité (31) et la deuxième surface d'extrémité (33) est disposée au niveau d'un point (87) ou en dessous de celui-ci, au niveau duquel point l'un des bords longitudinaux (83) d'une rainure (35) le plus proche de l'arête tranchante (47) correspondant à cette au moins une surface de support de plaquette de découpe (81) coupe une surface parmi la première surface d'extrémité (31) et la deuxième surface d'extrémité (33).
